# EUROPEAN PATENT APPLICATION

(11) **EP 2 381 620 A1**
(43) Date of publication of application: **26.10.2011**
(21) Application number: 11003072.3
(22) Date of filing: 12.04.2011
(51) Int. Cl.: H04L 12/24, H04L 29/08

(54) **Method for retrieving object from device management client and associated device management system**

(30) Priority: 23.04.2010 US 327273 P; 31.01.2011 US 17798
(71) Applicant: HTC Corporation, Taoyuan City Taoyuan County (TW)
(72) Inventor: Yu, Chun-Ta, Taoyuan City Taoyuan County 330 (TW); Tseng, Yin-Yeh, Taoyuan City Taoyuan County 330 (TW)
(74) Representative: Carstens, Dirk Wilhelm

(57) **Abstract**

A method for retrieving an object from a device management (DM) client and an associated DM system are disclosed to enable a DM server to retrieve a large object from the DM client. The method comprises receiving a first message issued from the DM server by the DM client, segmenting the object into a plurality of chunks by the DM client in response to receiving the first message, and transmitting each of the chunks in a respective second message to the DM server by the DM client. The first message is used for retrieving the object. The second message including the last chunk comprises a first element to indicate that there is no more chunk to be transmitted, and the second message including any other chunk includes a second element to indicate that there is at least one more chunk to be transmitted.

## Description

### BACKGROUND OF INVENTION

### 1. FIELD OF THE INVENTION

The present invention relates to device management (DM), and more particularly to a method for retrieving an object from a DM client and an associated DM system.

### 2. DESCRIPTION OF THE PRIOR ART

In OMA (Open Mobile Alliance) DM (Device Management) Protocol specification, the DM server and client communicate with each other by DM messages. In particular, the DM messages are exchanged between the server and client in a request/response form, that is, after the server/client transmits a message to the client/server, the server/client would not transmit another message until receiving a message in response to the previous-transmitted message from the client/server.

When the server wants to deliver an object to the client, the server would send a DM message containing an Add command and the object to the client. The OMA DM Protocol also supports the large object mechanism to deliver a large object from the server to the client. The large object is an object whose data size is too large to be included and transmitted in a single DM message. Thus, the server would transmit the large object to the client by segmenting the large object into multiple chunks and transmitting each chunk by one message. That is, the server delivers the large object to the client by multiple messages instead of single message.

However, if the server needs to retrieve a large object from the client, the OMA DM Protocol cannot handle this case. When retrieving an object or data from the client, the server sends a message containing a Get command to the client. When receiving the Get command from the server, the client replies a message containing a Result command to the server. If the retrieved object is too large to fit in a message, the server will receive only a message which just contains part of the retrieved object, or get a fail code to indicate the requested object size is too large.

Several OMA DM MOs (Management Object) are popularly implemented, and may contain large data in a node of the client (e.g. FUMO, SCOMO, DiagMonMO, etc.). The large data may contain useful information for the server. If the server cannot retrieve the large data normally, the server may not well perform some functions because of lack of the useful information.

### SUMMARY OF INVENTION

It is therefore one objective of the present invention to provide a method for retrieving an object from a device management (DM) client and an associated DM system, thereby enabling a DM server to retrieve a large object from the DM client.

In one embodiment of the present invention, a method for retrieving an object from a DM client to a DM server is provided. The method comprises steps of: receiving a first message issued from the DM server by the DM client, wherein the first message is used for retrieving the object; segmenting the object into a plurality of chunks by the DM client in response to receiving the first message; and transmitting each of the chunks in a respective second message to the DM server by the DM client, wherein the second message including the last one of the chunks comprises a first element to indicate that there is no more chunk to be transmitted, and the second message including any other one of the chunks includes a second element to indicate that there is at least one more chunk to be transmitted.

In another embodiment of the present invention, a DM client is provided. The DM client comprises: a receiving unit for receiving a first message issued from a DM server, wherein the first message is used by the DM server to retrieve an object from the DM client; a segmenting unit for segmenting the object into a plurality of chunks in response to the received first message; and a transmitting unit for transmitting each of the chunks in a respective second message to the DM server, wherein the second message including the last one of the chunks comprises a first element to indicate that there is no more chunk to be transmitted, and the second message including any other one of the chunks includes a second element to indicate that there is at least one more chunk to be transmitted.

### BRIEF DESCRIPTION OF THE DRAWINGS

Fig.1 is a flowchart of a method for retrieving an object from a DM client to a DM server according to an embodiment of the present invention.
Fig.2 and Fig.3 show two implementations of the message exchanging process between the DM server and client according to the embodiment in Fig.1.
Fig.4 shows a block diagram of an embodiment of a DM system implementing the method in Fig.1 according to the present invention.

### DETAILED DESCRIPTION

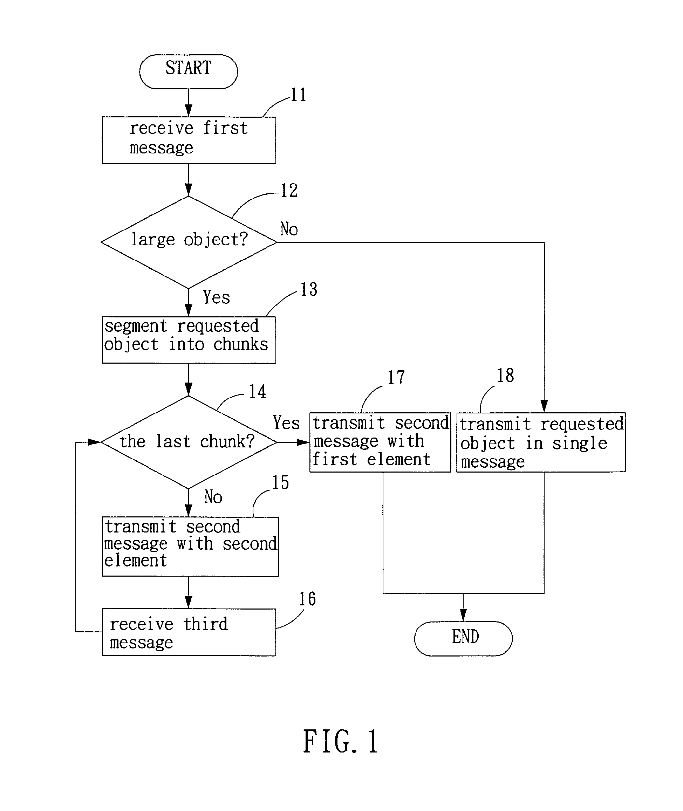

Reference will now to be made in detail to embodiments of the present invention, which are illustrated in the accompanying drawings. Fig.1 is a flowchart of a method for retrieving an object from a device management (DM) client to a DM server according to an embodiment of the present invention. Both the DM client and server can support the OMA DM Protocol. The DM client can be a mobile device such as a cellular phone, PDA device, portable computer, tablet computer, smart phone, handheld network device, or the like. The method in Fig.1 begins at step 11, where the DM client receives a first message issued from the DM server. When the DM server wants to retrieve an object from the DM client, the DM server issues the first message to the DM client to request the retrieval of the object. For example, the first message can comprise a Get command, which is defined in the OMA DM Protocol, to instruct the client to return the requested object. Next, the method proceeds to step 12.

In step 12, the DM client determines whether the requested object is a large object. The DM client can, for example, check the size of the requested object to make the decision. That is, if the size of the requested object is too large to be included in a single message, then the requested object is a large object. If the requested object is the large object, the method proceeds to step 13; otherwise, the method proceeds to step 18. In step 13, the DM client segments the requested object into a plurality of chunks, where the size of each chunk is small enough to fit into a single message for transmission. The method then proceeds to step 14. On the other hand, in step 18, the DM client directly delivers the requested object to the DM server in a single DM message since the requested object is not a large object (i.e. can be included in a single DM message). After step 18 is executed, the method is completed.

In step 14, the DM client determines whether the next chunk to be transmitted is the last one of the chunks. If so, the method proceeds to step 17; otherwise, the method goes to step 15. In step 17, since the next chunk is the last chunk, the DM client transmits the next chunk to the DM server in a second message which comprises a first element to indicate that there is no more chunk to be transmitted. For example, if the first message received in step 11 comprises the Get command, the second message can comprise a Result command, which is also defined in the OMA DM Protocol, to reply to the Get command. Also, the first element can be a Final element defined in the OMA DM Protocol. When receiving the second message containing the first element, the DM server would know that the requested object has been wholly retrieved. After step 17 is executed, the method is completed.

On the other hand, in step 15, since the next chunk is not the last chunk, the DM client transmits the next chunk to the DM server in a second message which comprises a second element to indicate that there is still at least one more chunk to be transmitted. For example, the second element can be a MoreData element defined in the OMA DM Protocol. When receiving the second message containing the second element, the DM server would reply a third message to the DM client for requesting the next chunk. For example, the third message can comprise an Alert command with an alert code 1222, which is used in the OMA DM Protocol to ask for more messages. The third message can further include a status response of the DM server to the received second message containing the second element. For example, the status response can have a code of 213 to indicate that the chunked item is accepted and buffered, as defined in the OMA DM Protocol. After step 15 is executed, the method then proceeds to step 16.

In step 16, the DM client receives the third message mentioned above from the DM server. Since the third message asks the DM client for the next chunk of the requested object, the method returns to step 14 to start the transmission of the next chunk.

Preferably, the third message received by the DM client in step 16 further comprises a Get command, and the second message including the next chunk of the requested object transmitted by the DM client in steps 15 and 17 comprises a Result command, which can be used to reply to the Get command of the third message.

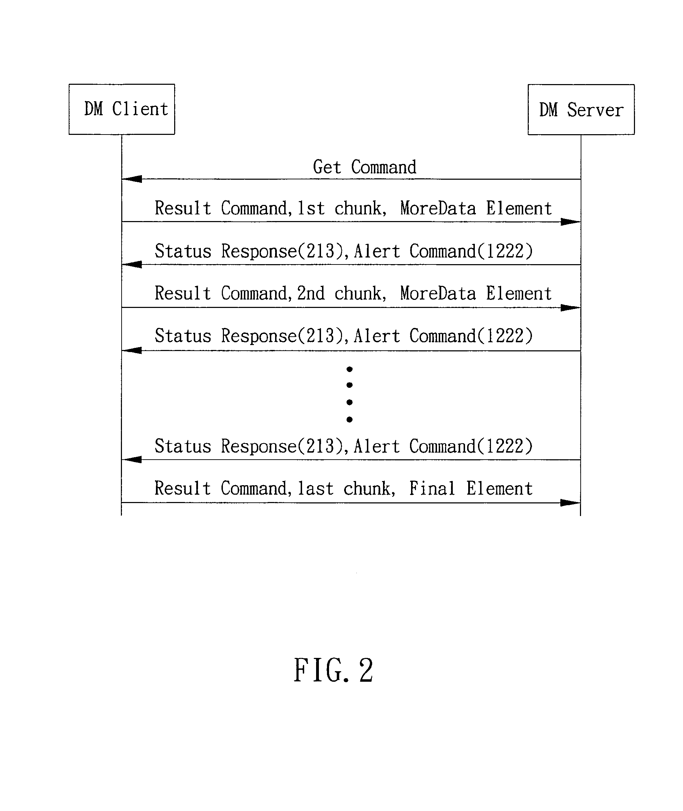

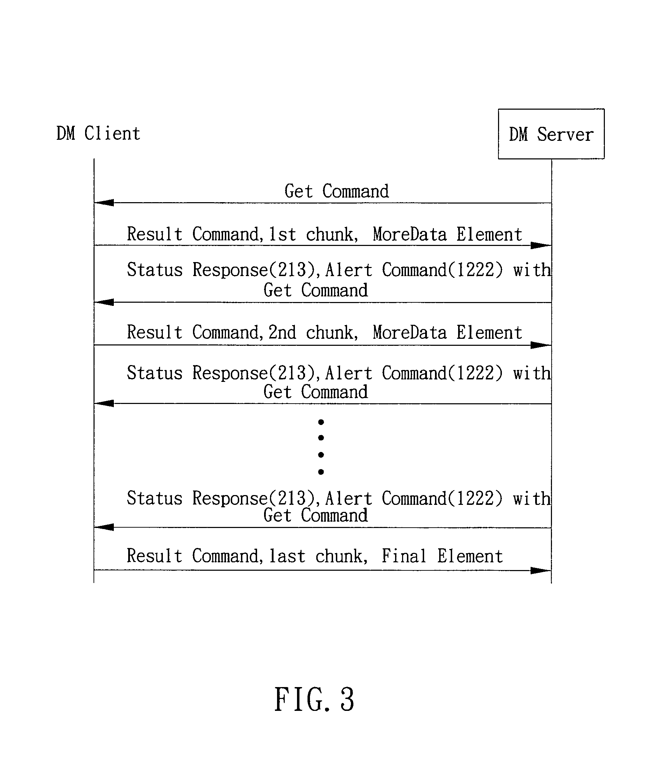

Fig.2 and Fig.3 show two implementations of the message exchanging process between the DM server and client according to the embodiment in Fig.1. Please note that these two implementations are just examples, not intended to limit the scope of the present invention. In Fig.2, a large object is retrieved from the DM client to the DM server. The server first sends a message containing a Get command to the client, and the client replies with a message containing a Result command, the first chunk of the large object and a MoreData element. Then, the server sends a message containing a status response with the code 213 and an alert command with the alert code 1222 to request the next chunk of the large object, and the client replies with a message containing a Result command, the second chunk of the large object and a MoreData element. The above request/response process would be repeated until the client sends a message containing a Result command, the last chunk of the large object and a Final element. Fig.3 is similar to Fig.2 except that the message sent by the DM server to request the next chunk further includes a Get command. Then, in Fig.3, each Result command sent by the client can be considered as a response to a respective Get command sent by the server.

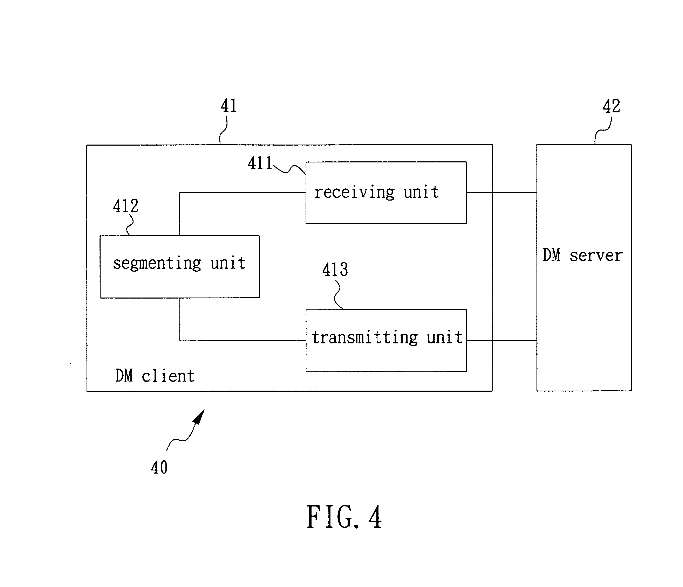

Fig.4 shows a block diagram of an embodiment of a DM system implementing the method in Fig.1 according to the present invention. As shown in Fig.4, the DM system 40 comprises a DM client 41 and a DM server 42. The DM client 41 is for retrieving an object therefrom to the DM server 42, and comprises a receiving unit 411, a segmenting unit 412 and a transmitting unit 413. The receiving unit 411 receives from the DM server 42 the above first message for requesting the retrieval of an object. For example, the first message can comprise a Get command. The segmenting unit 412 segments the object into a plurality of chunks in response to the received first message. Preferably, the segmenting unit 412 determines whether to perform the segmentation according to whether the object requested by the received first message is a large object. The transmitting unit 413 transmits each chunk in a respective second message mentioned above to the DM server 42, where the second message including the last chunk comprises the first element to indicate that there is no more chunk to be transmitted, and the second message including any other chunk includes the second element to indicate that there is at least one more chunk to be transmitted. For example, the second message can comprise a Result command, the first element can be a Final element, and the second element can be a MoreData element.

Furthermore, the receiving unit 411 receives a third message for requesting the next chunk sent from the DM server 42 when the DM server 42 receives the second message including the second element from the transmitting unit 413. For example, the third message can comprise an Alert command with an alert code 1222. The third message can further include a status response of the DM server 42 to the received second message containing the second element. For example, the status response can have a code of 213 to indicate that the chunked item is accepted and buffered. When the receiving unit 411 receives the third message, the transmitting unit 413 would transmit the second message including the next chunk to the DM server 42.

While the present invention has been shown and described with reference to the preferred embodiments thereof and the illustrative drawings, it should not be considered as limited thereby. Various possible modifications and alterations can be conceived by persons skilled without departing from the scope and the spirit of the present invention.

## Claims

1. A method for retrieving an object from a device management (DM) client to a DM server, the method comprising steps of:
receiving a first message issued from the DM server by the DM client,
wherein the first message is used for retrieving the object; segmenting the object into a plurality of chunks by the DM client in response
to receiving the first message; and transmitting each of the chunks in a respective second message to the DM
server by the DM client, wherein the second message including the last one of the chunks comprises a first element to indicate that there is no more chunk to be transmitted, and the second message including any other one of the chunks includes a second element to indicate that there is at least one more chunk to be transmitted.

2. The method of claim 1, wherein the segmenting step is executed when the object is a large object whose size is too large to be included in single second message.

3. The method of claim 1, further comprising:
receiving by the DM client a third message sent by the DM server when the DM server receives the second message including the second element, wherein the third message includes a status response of the DM server to the received second message including the second element.

4. The method of claim 1, wherein the first message comprises a Get command.

5. The method of claim 4, wherein the second message comprises a Result command.

6. The method of claim 1, further comprising:
receiving a third message for requesting a next one of the chunks by the DM client, wherein the third message is sent by the DM server when the DM server receives the second message including the second element.

7. The method of claim 6, wherein the third message comprises an Alert command with an alert code.

8. The method of claim 6, wherein the DM client transmits the second message including the next one of the chunks to the DM server when receiving the third message; and
the third message comprises a Get command, and the second message
including the next one of the chunks comprises a Result command.

9. A device management (DM) client comprising:
a receiving unit for receiving a first message issued from a DM server, wherein the first message is used by the DM server to retrieve an object from the DM client;
a segmenting unit for segmenting the object into a plurality of chunks in response to the received first message; and
a transmitting unit for transmitting each of the chunks in a respective second message to the DM server, wherein the second message including the last one of the chunks comprises a first element to indicate that there is no more chunk to be transmitted, and the second message including any other one of the chunks includes a second element to indicate that there is at least one more chunk to be transmitted.

10. The DM client of claim 9, wherein the segmenting unit segments the object into the chunks when the object is a large object whose size is too large to be included in single second message.

11. The DM client of claim 9, wherein the receiving unit receives a third message sent by the DM server when the DM server receives the second message including the second element, wherein the third message includes a status response of the DM server to the received second message including the second element.

12. The DM client of claim 9, wherein the first message comprises a Get command and the second message comprises a Result command.

13. The DM client of claim 9, wherein the receiving unit receives a third message for requesting a next one of the chunks, wherein the third message is sent by the DM server when the DM server receives the second message including the second element.

14. The DM client of claim 13, wherein the third message comprises an Alert command with an alert code.

15. The DM client of claim 13, wherein the transmitting unit transmits the second message including the next one of the chunks to the DM server when the receiving unit receives the third message; and
the third message comprises a Get command, and the second message including the next one of the chunks comprises a Result command.
